# EUROPEAN PATENT SPECIFICATION

(11) **EP 4 145 560 B1**
(45) Date of publication and mention of the grant of the patent: **28.10.2026**
(21) Application number: 21797726.3
(22) Date of filing: 23.04.2021
(51) Int. Cl.: H01M 4/13, H01M 4/74, H01M 4/80, H01M 10/42, H01M 4/139, H01M 10/052, H01M 4/38, H01M 4/04, H01M 4/134, H01M 4/66, H01M 4/02

(54) **NEGATIVE ELECTRODE FOR LITHIUM SECONDARY BATTERY COATED WITH LITHIOPHILIC MATERIAL AND PRODUCTION METHOD THEREOF**
NEGATIVE ELEKTRODE FÜR EINE LITHIUMSEKUNDÄRBATTERIE, BESCHICHTET MIT EINEM LITHIOPHILEN MATERIAL, UND PRODUKTIONSVERFAHREN DAVON
ÉLECTRODE NÉGATIVE POUR BATTERIE SECONDAIRE AU LITHIUM REVÊTUE D'UN MATÉRIAU LITHIOPHILE, ET SON PROCÉDÉ DE PRODUCTION

(30) Priority: 27.04.2020 KR 20200050738
(43) Date of publication of application: 08.03.2023
(73) Proprietor: LG Energy Solution, Ltd., Seoul 07335 (KR)
(72) Inventor: LEE, Jung Pil, Daejeon 34122 (KR); YOON, Jong Keon, Daejeon 34122 (KR); HWANG, Sun Woo, Daejeon 34122 (KR)
(74) Representative: Goddar, Heinz J.
(86) International application number: PCT/KR2021/005192
(87) International publication number: WO 2021/221397

(56) References cited:
- EP-A1- 2 942 828
- CN-A- 108 428 858
- CN-A- 109 088 051
- CN-A- 110 828 829
- CN-A- 110 931 708
- JP-A- 2000 153 221
- KR-B1- 100 366 345
- KR-B1- 101 914 171
- HOU GUANGMEI; SUN QIDI; AI QING; REN XIAOHUA; XU XIAOYAN; GUO HUANHUAN; GUO SHIRUI; ZHANG LIN; FENG JINKUI; DING FEI; AJAYAN PULIC: "Growth direction control of lithium dendrites in a heterogeneous lithiophilic host for ultra-safe lithium metal batteries", JOURNAL OF POWER SOURCES, ELSEVIER, AMSTERDAM, NL, vol. 416, 1 January 1900 (1900-01-01), AMSTERDAM, NL, pages 141 - 147, XP085599023, ISSN: 0378-7753, DOI: 10.1016/j.jpowsour.2019.01.074

## Description

### [Technical Field]

The present invention relates to a negative electrode for lithium secondary batteries coated with a lithiophilic material and a method of manufacturing the same, and more particularly to a negative electrode for lithium secondary batteries coated with a lithiophilic material such that growth of lithium dendrites on the surface of a negative electrode current collector using lithium metal is inhibited and a method of manufacturing the same.

### [Background Art]

A lithium secondary battery, which is reusable and has high energy density, has attracted attention as a new energy source that has environmentally friendly characteristics, since the lithium secondary battery not only remarkably reduces the use of fossil fuels but also does not generate by-products as the result of the use of energy.

The lithium secondary battery has been spotlighted as a power source that has high energy density suitable for wearable devices or portable devices and as a high-output power source for electric vehicles. As a result, research on a lithium secondary battery that has high operating voltage and energy density has been more actively conducted.

The operating voltage and energy density of the lithium secondary battery may be changed depending on the kind of an electrode active material, the kind of an electrolytic solution, and the loading amount of an electrode mixture layer. A lithium cobalt composite oxide or a lithium-containing manganese composite oxide is used as a positive electrode active material, and lithium metal, a carbon-based material, or silicon is used as a negative electrode active material. The lithium metal has an advantage of high energy density but has a problem in that, when lithium metal reacts with moisture in air, by-products, such as LiOH, Li₂O, and Li₂CO₃, are generated.

By-products generated as the result of the lithium metal reacting with the electrolytic solution may considerably deteriorate performance of the battery and may cause internal short circuit.

Furthermore, in the case in which the lithium metal is used as a negative electrode, lithium dendrites are formed on the surface of the lithium metal during charging and discharging of the battery. In the case in which the lithium dendrites grow and penetrate a separator, the lifespan of the lithium secondary battery may be reduced and a fatal problem related to safety may occur. For example, microscopic short circuit may occur.

Patent Document 1 discloses a lithium polymer secondary battery configured such that a cross-linking polymer protective thin film using a diacrylic-based monomer is formed on the surface of lithium metal in order to improve safety of a lithium metal negative electrode, whereby it is possible to improve interface characteristics between the lithium metal electrode and a polymer electrolyte.

Since the protective thin film is easily peeled from the surface of the electrode as the result of driving of the battery, however, it is difficult to sufficiently obtain a lithium dendrite growth prevention effect.

Patent Document 2 discloses an electrode for lithium secondary batteries including an electrode active material layer including lithium metal between a current collector and a protective layer, the protecting layer including a thermally conductive material, wherein heat is uniformly distributed on the surface of the electrode during charging and discharging, whereby lithium dendrites uniformly grow.

However, Patent Document 2 does not solve a problem in that lithium dendrites grow on the surface of a negative electrode that faces a positive electrode, whereby microscopic short circuit occurs. As described above, the lithium metal negative electrode has still not been applied to the related fields due to growth of lithium dendrites in spite of advantages of high energy density and high voltage

### (Prior Art Documents)

(Patent Document 1) Korean Registered Patent Publication No. 0425585 (2004.03.22)
(Patent Document 2) Korean Patent Application Publication No. 2019-0013630 (2019.02.11)

CN 109 088 051 A relates to a metal lithium anode and a preparation method and application thereof, which relate to the technical field of battery electrode material preparation. The metal lithium negative electrode is characterized in that the metal lithium negative electrode is composed of a three-dimensional porous substrate and metallic lithium distributed in the pores thereof; wherein the three-dimensional porous substrate is distributed with a pro-lithium layer.

### [Disclosure]

### [Technical Problem]

The present invention has been made in view of the above problems, and it is an object of the present invention to provide a negative electrode for lithium secondary batteries coated with a lithiophilic material in order to prevent occurrence of short circuit as the result of lithium dendrites that grow on the surface of the negative electrode coming into contact with a positive electrode and a method of manufacturing the same.

### [Technical Solution]

In order to accomplish the above object, a negative electrode for lithium secondary batteries obtained by the method according to the present invention includes a negative electrode current collector including a porous structure having an inner pore or a through-hole formed therethrough from the upper surface to the lower surface thereof, wherein a lithiophilic material (LPM) is applied to the surface of the porous structure or the through-hole excluding a first surface of the negative electrode current collector that faces a positive electrode, and the lithiophilic material is formed at least on a surface of the inner pore of the porous structure or the through-hole, and wherein the thickness of the negative electrode current collector is 5 µm to 30 µm.

Lithium plating (Li plating) may occur on the lithiophilic material.

The lithiophilic material may be at least one of a metal or a metal oxide. Specifically, the lithiophilic material may be at least one of: a metal including Au, Ag, Pt, Zn, Si, or Mg; and a metal oxide including CuO, ZnO, CoO, or MnO.

A method of manufacturing the negative electrode includes preparing a negative electrode current collector including a porous structure having an inner pore or a through-hole formed therethrough from the upper surface to the lower surface thereof, masking a first surface of the negative electrode current collector that faces a positive electrode, coating the masked negative electrode current collector with a lithiophilic material, and removing the masking, and removing a lithiophilic material coating solution after the step of removing the masking, wherein the lithiophilic material is coated at least in the inner pore or the through-hole of the negative electrode current collector from which the masking is removed, except the first surface of the negative electrode current collector which has been masked and faces the positive electrode.

The coating step may be performed by at least one selected from the group consisting of immersing, spin coating, dip coating, spray coating, doctor blade coating, solution casting, drop coating, physical vapor deposition (PVD), and chemical vapor deposition (CVD).

The masking step may be performed by attaching a tape to the first surface of the negative electrode current collector.

In addition, the present invention provides an electrode assembly including the negative electrode.

The electrode assembly may be one of a mono-cell in which two electrodes different from each other are disposed such that a separator is interposed therebetween, and a bi-cell in which three electrodes are disposed such that adjacent the electrodes have different polarities from each other and a separator is interposed therebetween.

In addition, the present invention provides a lithium secondary battery having the electrode assembly received in a battery case together with an electrolytic solution or a solid electrolyte. In addition, the present invention provides a battery module or a battery pack including the lithium secondary battery as a unit cell.

### [Advantageous Effects]

As is apparent from the above description, in a negative electrode for lithium secondary batteries according to the present invention, lithium plating occurs in an inner pore of a porous structure of a negative electrode current collector or a through-hole of the negative electrode current collector, whereby lithium dendrites grow in the inner pore or the through-hole. In addition, no lithium dendrites are formed on the surface of the negative electrode current collector that faces a positive electrode.

Consequently, it is possible to prevent growth of lithium dendrites toward the positive electrode, thus preventing occurrence of internal short circuit, whereby it is possible to improve lifespan characteristics and safety of a lithium secondary battery.

### [Description of Drawings]

FIG. 1 is a photograph showing a surface of a negative electrode manufactured according to Example 1.
FIG. 2 is a SEM photograph showing the surface of the negative electrode manufactured according to Example 1 after removing a masking member, the surface that has been masked and thus having no coating layer formed thereon.
FIG. 3 is an enlarged view of a part of FIG. 2.
FIG. 4 is a SEM photograph showing the surface of the negative electrode manufactured according to Example 1 that has not been masked and thus having a lithiophilic material coating layer formed thereon.
FIG. 5 is a SEM photograph of a negative electrode manufactured according to Example 2.
FIG. 6 is a SEM photograph of a negative electrode manufactured according to Example 3.
FIG. 7 is a SEM photograph showing a surface of a negative electrode manufactured according to Example 4 after removing a masking member, the surface that has been masked and thus having no coating layer formed thereon.
FIG. 8 is an enlarged view of a part of FIG. 7.
FIG. 9 is a SEM photograph showing the surface of the negative electrode manufactured according to Example 4 that has not been masked and thus having a lithiophilic material coating layer formed thereon.
FIG. 10 is a photograph showing a surface of a negative electrode manufactured according to Comparative Example 1.
FIG. 11 is a SEM photograph of a negative electrode manufactured according to Comparative Example 2.
FIG. 12 is an enlarged view of a part of FIG. 11.
FIG. 13 is a graph showing EDX results of the surface of the negative electrode manufactured according to Example 1 that has the lithiophilic material coating layer formed thereon.
FIG. 14 is a graph showing XRD results of the surface of the negative electrode manufactured according to Example 1 that has the lithiophilic material coating layer formed thereon.

### [Best Mode]

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

A negative electrode for lithium secondary batteries according to the present invention may include a negative electrode current collector, including a porous structure having an inner pore or a through-hole formed therethrough from the upper surface to the lower surface thereof, and a lithiophilic material (LPM) formed on another surface of the negative electrode current collector, excluding a first surface of the negative electrode current collector that faces a positive electrode, and formed in the inner pore and the through-hole by coating.

The negative electrode current collector may be made of lithium metal or may be configured such that lithium metal is located on copper, nickel, or stainless steel foil.

Generally, in the case in which lithium metal is used for the negative electrode, the negative electrode has advantages of high energy density and high output. The lithium metal, which is lithium in a metal state, means pure lithium, which is not alloyed with a metal other than lithium. However, the lithium metal may form a lithium nucleus on the surface of the negative electrode, and the lithium nucleus may grow into lithium dendrites. There is a high danger of the lithium dendrites penetrating a separator, whereby internal short circuit may occur.

In the present invention, therefore, a specific portion of the negative electrode current collector is coated with a lithiophilic material such that lithium is easily combined only at the specific portion of the negative electrode current collector to induce formation of the lithium nucleus.

Specifically, in order to prevent lithium dendrites from growing toward the positive electrode, the present invention uses a negative electrode current collector including a porous structure having an inner pore or a through-hole formed therethrough from the upper surface to the lower surface thereof.

The porous structure having the inner pore is a structure in which a pore is formed in the negative electrode current collector. The pore may be an open pore such that a lithiophilic material is formed in the pore by coating.

In addition, the porous structure includes a structure in which a plurality of recesses is formed in the surface of the negative electrode current collector. The bottom and side surface of each recess are coated with a lithiophilic material, and lithium plating occurs on the lithiophilic material.

The negative electrode current collector including the through-hole formed therethrough from the upper surface to the lower surface thereof is configured such that an opening is formed through the negative electrode current collector in a thickness direction thereof. The through-hole may be formed in the negative electrode current collector by punching the negative electrode current collector using a microneedle. A lithiophilic material is formed in the through-hole of the negative electrode current collector by coating, and lithium plating occurs on the lithiophilic material. Specifically, the surface of the through-hole is coated with the lithiophilic material.

In addition, a mesh type negative electrode current collector may be used as the negative electrode current collector. A negative electrode current collector having a mesh type single layer structure or a negative electrode current collector having a structure in which two or more mesh type single layers are stacked may be used.

When the inner pore or the through-hole of the negative electrode current collector is coated with a lithiophilic material, lithium plating (Li plating) occurs on the lithiophilic material, whereby a lithium nucleus is formed, and lithium dendrites grow from the lithium nucleus only in the inner pore or the through-hole of the negative electrode current collector. Consequently, the lithium dendrites grow so as not to protrude from the surface of the negative electrode current collector.

The other surface of the negative electrode current collector, excluding the first surface of the negative electrode current collector that faces the positive electrode, may also be coated with the lithiophilic material. Lithium plating may occur on the lithiophilic material on the other surface of the negative electrode current collector, whereby lithium dendrites may grow.

In contrast, the first surface of the negative electrode current collector that faces the positive electrode is coated with no lithiophilic material, whereby no lithium dendrites are generated on the first surface of the negative electrode current collector.

The negative electrode current collector may be configured in any of various forms, such as a film, a sheet, a foil, a net, a porous body, a foam body, and a non-woven fabric body, each of which has a micro-scale uneven pattern formed on the surface thereof or each of which has no micro-scale uneven pattern formed on the surface thereof.

The thickness of the negative electrode current collector is 5 µm to 30 µm, preferably 10 µm to 20 µm. If the thickness of the negative electrode current collector is greater than 30 µm, the capacity of the electrode per volume may be reduced. If the thickness of the negative electrode current collector is less than 5 µm, a folding phenomenon may occur at the time of manufacture of the electrode.

In the present invention, an electrode active material layer may be optionally included. That is, the negative electrode according to the present invention may include only a negative electrode current collector coated with a lithiophilic material without inclusion of a negative electrode active material layer or may include a negative electrode current collector coated with a lithiophilic material and a negative electrode active material layer.

The negative electrode active material may include at least one selected from the group consisting of a carbon material, a lithium alloy, a lithium metal composite oxide, lithium-containing titanium composite oxide (LTO), and a combination thereof. Here, the lithium alloy includes an element capable of being alloyed with lithium, and mention of Si, Sn, C, Pt, Ir, Ni, Cu, Ti, Na, K, Rb, Cs, Fr, Be, Mg, Ca, Sr, Sb, Pb, In, Zn, Ba, Ra, Ge, Al, or an alloy thereof may be made as the element capable of being alloyed with the lithium.

The thickness of the negative electrode active material layer may be 0 µm to 40 µm, specifically 5 µm to 40 µm, more specifically 10 µm to 20 µm.

In the present invention, a method of forming the negative electrode active material layer on the negative electrode current collector is not particularly restricted, and a method known in the art may be used. For example, the negative electrode active material layer may be formed on the negative electrode current collector by dry or wet deposition or coating.

At least one of a metal or a metal oxide may be selected as the lithiophilic material. For example, the metal may be gold (Au), silver (Ag), platinum (Pt), zinc (Zn), silicon (Si), or magnesium (Mg), and the metal oxide may be copper oxide, zinc oxide, or cobalt oxide, which is a nonmetal.

The present invention provides a method of manufacturing the negative electrode for lithium secondary batteries. Specifically, the present invention provides a method of manufacturing the negative electrode for lithium secondary batteries, the method including a step of preparing a negative electrode current collector including a porous structure having an inner pore or a through-hole formed therethrough from the upper surface to the lower surface thereof, a step of masking a first surface of the negative electrode current collector that faces the positive electrode, a step of coating the masked negative electrode current collector with a lithiophilic material, and a step of removing the masking, and removing a lithiophilic material coating solution after the step of removing the masking, wherein the lithiophilic material is coated at least in the inner pore or the through-hole of the negative electrode current collector from which the masking is removed, except the first surface of the negative electrode current collector which has been masked and faces the positive electrode.

In the negative electrode for lithium secondary batteries according to the present invention, a second surface of the negative electrode current collector, which does not face the positive electrode, must be coated with a lithiophilic material, on which lithium is easily plated, in order to inhibit growth of lithium dendrites on the first surface of the negative electrode current collector that faces the positive electrode, at the time of manufacture of an electrode assembly. Consequently, the first surface is masked, the entire surface of the negative electrode current collector is coated with a lithiophilic material, and the negative electrode current collector is washed to remove the masking.

In the negative electrode current collector according to the present invention, a lithiophilic material must be formed in the inner pore or the through-hole by coating. A masking solution used in the masking step must not be applied to the inner pore or the through-hole of the negative electrode current collector.

Consequently, the size of the inner pore of the negative electrode current collector and the diameter of the through-hole of the negative electrode current collector must be set to such an extent that the masking solution cannot permeate the inner pore and the through-hole of the negative electrode current collector, and therefore the size of the inner pore of the negative electrode current collector and the diameter of the through-hole of the negative electrode current collector must be appropriately designed in consideration of viscosity and surface tension of the masking solution.

Alternatively, a method of attaching a tape made of polyimide, etc. may be used for masking.

A lithiophilic material coating method is not particularly restricted. For example, immersing, spin coating, dip coating, spray coating, doctor blade coating, solution casting, drop coating, physical vapor deposition (PVD), or chemical vapor deposition (CVD) may be used.

A process of removing a lithiophilic material coating solution after the step of removing the masking is further included. A surplus lithiophilic material that has not been coated on the surface of the negative electrode current collector and the lithiophilic material coating solution are removed through a washing process.

The present invention provides an electrode assembly including the negative electrode for lithium secondary batteries and a positive electrode.

The positive electrode is manufactured, for example, by applying a positive electrode mixture including a positive electrode active material to a positive electrode current collector and drying the positive electrode mixture. The positive electrode mixture may further optionally include a binder, a conductive agent, and a filler, as needed.

The positive electrode current collector is not particularly restricted, as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase the force of adhesion of the positive electrode active material. The positive electrode current collector may be configured in various forms, such as a film, a sheet, a foil, a net, a porous body, a foam body, and a non-woven fabric body.

The positive electrode active material is a material that is capable of inducing an electrochemical reaction. The positive electrode active material may be a lithium transition metal oxide including two or more transition metals. For example, the positive electrode active material may be, but is not limited to, a layered compound, such as a lithium cobalt oxide (LiCoO₂) or a lithium nickel oxide (LiNiO₂) substituted with one or more transition metals; a lithium manganese oxide substituted with one or more transition metals; a lithium nickel-based oxide represented by the chemical formula LiNi_{1-y}M_{y}O₂ (where M = Co, Mn, Al, Cu, Fe, Mg, B, Cr, Zn, or Ga, at least one of which is included, and 0.01≤y≤0.7); a lithium nickel cobalt manganese composite oxide represented by the chemical formula Li_{1+z}Ni_{b}Mn_{c}Co_{1-(b+c+d)}M_{d}O₍₂₋ₑ₎Aₑ (where -0.5≤z≤0.5, 0.1≤b≤0.8, 0.1≤c≤0.8, 0≤d≤0.2, 0≤e≤0.2, b+c+d<1, M = Al, Mg, Cr, Ti, Si, or Y, and A = F, P, or Cl), such as Li_{1+z}Ni_{1/3}CO_{1/3}Mn_{1/3}O₂ or Li_{1+z}Ni_{0.4}Mn_{0.4}Co_{0.2}O₂; or olivine-based lithium metal phosphate represented by the chemical formula Li₁₊ₓM_{1-y}M'ₚPO_{4-z}X_{z} (where M = a transition metal, preferably Fe, Mn, Co, or Ni, M' = Al, Mg, or Ti, X = F, S, or N, -0.5≤x≤0.5, 0≤y≤0.5, and 0≤z≤0.1).

The conductive agent is generally added so that the conductive agent accounts for 1 weight% to 30 weight% based on the total weight of the mixture including the positive electrode active material. The conductive agent is not particularly restricted, as long as the conductive agent exhibits high conductivity without inducing any chemical change in a battery to which the conductive agent is applied. For example, carbon; graphite, such as natural graphite or artificial graphite; carbon black, such as acetylene black, Ketjen black, channel black, furnace black, lamp black, or summer black; conductive fiber, such as carbon fiber or metallic fiber; metallic powder, such as carbon fluoride powder, aluminum powder, or nickel powder; conductive whisker, such as a zinc oxide or potassium titanate; a conductive metal oxide, such as a titanium oxide; or a conductive materials, such as a polyphenylene derivative, may be used as the conductive agent.

The binder is a component assisting in binding between the active material and the conductive agent and in binding with the current collector. The binder is generally added in an amount of 1 weight% to 30 weight% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, styrene butadiene rubber, fluoro rubber, and various copolymers thereof.

The filler is an optional component used to inhibit expansion of the electrode. There is no particular limit to the filler, as long as the filler is made of a fibrous material while the filler does not cause chemical changes in a battery to which the filler is applied. As examples of the filler, there may be used olefin-based polymers, such as polyethylene and polypropylene; and fibrous materials, such as glass fiber and carbon fiber.

The electrode assembly according to the present invention includes a separator interposed between the positive electrode and the negative electrode.

For example, the electrode assembly may be a mono-cell in which two electrodes different from each other are disposed such that a separator is interposed therebetween, or a bi-cell in which three electrodes are disposed such that adjacent electrodes have different polarities from each other and a separator is interposed therebetween. Specifically, the bi-cell may be configured such that a negative electrode, a separator, a positive electrode, a separator, and a negative electrode are sequentially stacked, and each of the negative electrodes may be coated with a lithiophilic material in the state in which the surface of each of the negative electrodes that faces a corresponding one of the separators is masked.

A thin insulative film that exhibits high ionic permeability and mechanical strength may be used as the separator. For example, the separator may be a porous substrate made of any one selected from the group consisting of polyethylene, polypropylene, polybutylene, polypentene, polyethylene terephthalate, polybutylene terephthalate, polyester, polyacetal, polyamide, polycarbonate, polyimide, polyetheretherketone, polyethersulfone, polyphenylene oxide, polyphenylene sulfide, and polyethylene naphthalate or a mixture of two or more thereof.

Hereinafter, the present invention will be described with reference to the following examples. These examples are provided only for easier understanding of the present invention and should not be construed as limiting the scope of the present invention.

### Manufacture of negative electrode

### <Example 1>

A polyimide tape, as a masking member, was attached to one surface of a copper current collector having a mesh structure.

The copper current collector having the masking member attached thereto was immersed in a lithiophilic material (LPM) coating solution for 10 seconds to perform LPM coating.

A solution in which HAuCl₄ was dissolved in ethanol so as to have a concentration of 2 mg/ml was used as the LPM coating solution.

The polyimide tape was detached from the negative electrode current collector coated with the LPM, and the negative electrode current collector was washed to remove residual LPM coating solution from the surface of the negative electrode current collector.

A negative electrode in which the remaining portion thereof was coated with the LPM, excluding the surface thereof to which the polyimide tape was attached, was manufactured through the above processes.

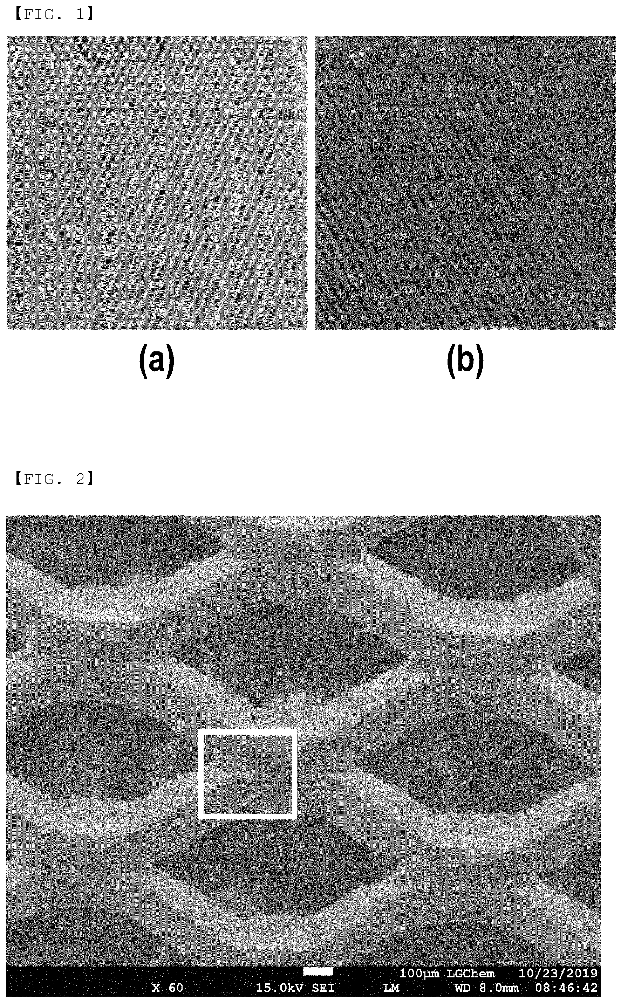

A photograph of the surface of the negative electrode manufactured according to Example 1 is shown in FIG. 1, and SEM photographs of the negative electrode are shown in FIGS. 2 to 4. FIG. 1(a) shows the surface of the negative electrode after removing a masking member, the surface that has been masked and thus having no coating layer formed thereon, and FIG. 1(b) shows the surface of the negative electrode that has not been masked and thus having a lithiophilic material coating layer formed thereon.

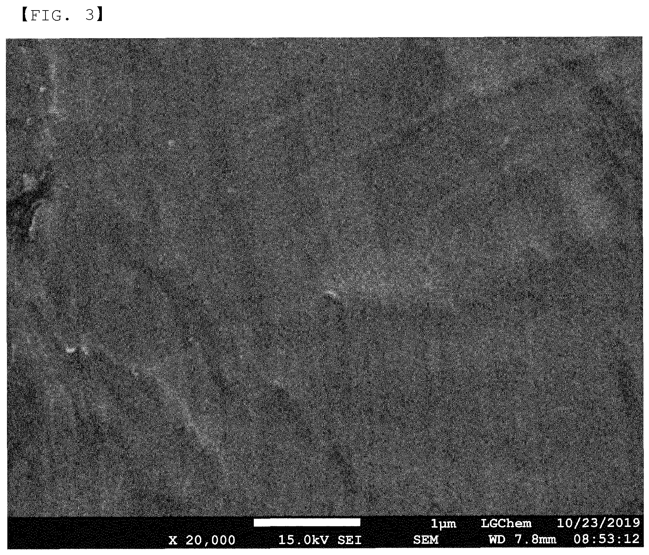

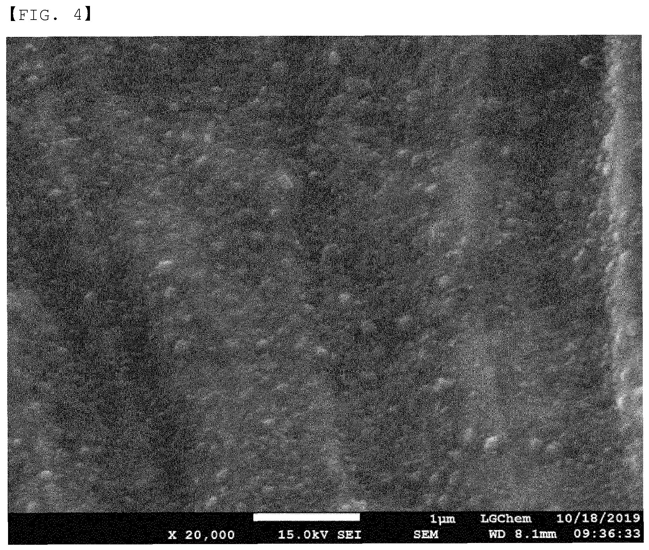

FIG. 2 shows the surface of the negative electrode after removing the masking member, the surface that has been masked and thus having no coating layer formed thereon, FIG. 3 is an enlarged view of a white quadrangular portion of FIG. 2, and FIG. 4 shows the surface of the negative electrode that has not been masked and thus having a lithiophilic material coating layer formed thereon.

FIG. 4 shows the surface of the copper current collector having the mesh structure in a thickness direction thereof, and coated LPM particles are observed therefrom.

### <Example 2>

A negative electrode was manufactured using the same method as in Example 1 except that the concentration of HAuCl₄ in the LPM coating solution was changed from 2 mg/ml to 5 mg/ml in Example 1.

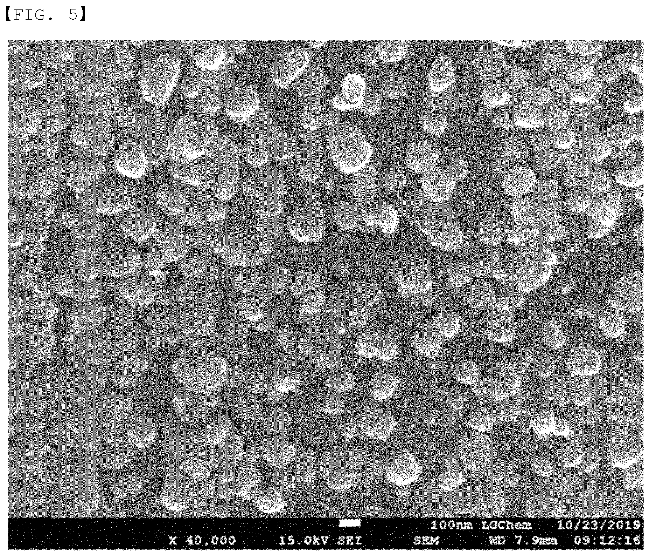

A SEM photograph of the negative electrode manufactured according to Example 2 is shown in FIG. 5. Referring to FIG. 5, it can be seen that an LPM coating layer was formed on the surface of the negative electrode.

### <Example 3>

A negative electrode was manufactured using the same method as in Example 1 except that HAuCl₄ in the LPM coating solution was changed to AgNo₃ in Example 1.

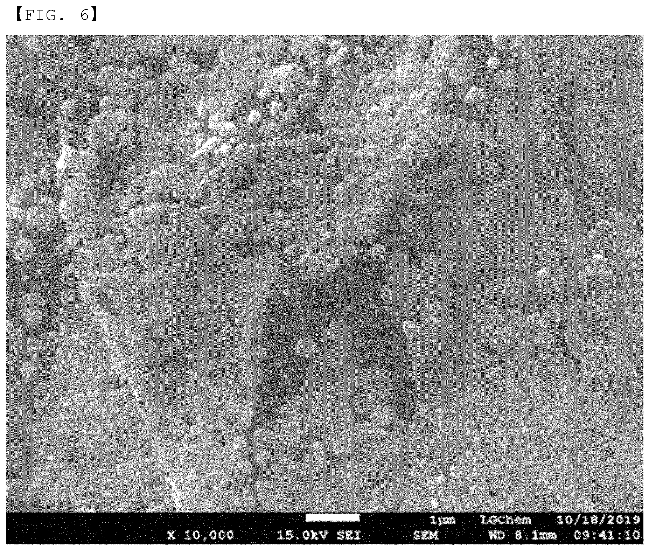

A SEM photograph of the negative electrode manufactured according to Example 3 is shown in FIG. 6. Referring to FIG. 6, it can be seen that an LPM coating layer was formed on the surface of the negative electrode.

### <Example 4>

A negative electrode was manufactured using the same method as in Example 1 except that the copper current collector was changed to a bronze current collector in Example 1.

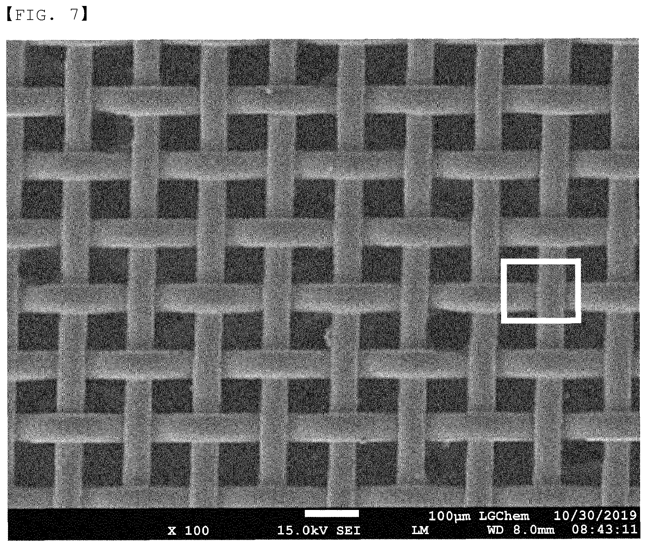

SEM photographs of the negative electrode manufactured according to Example 4 are shown in FIGS. 7 to 9.

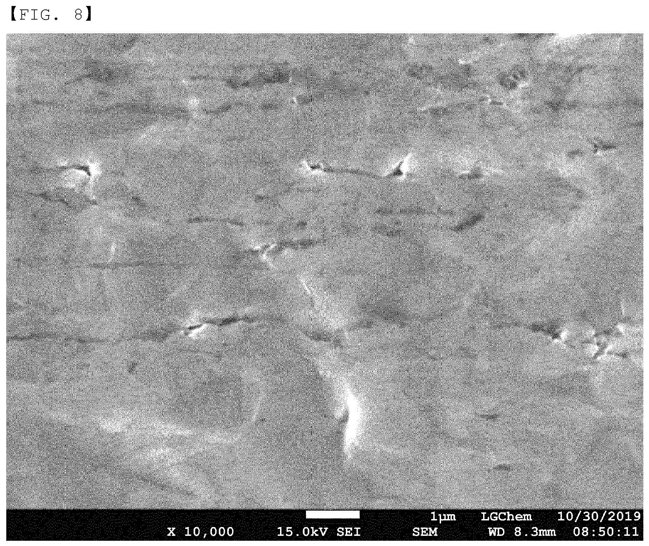

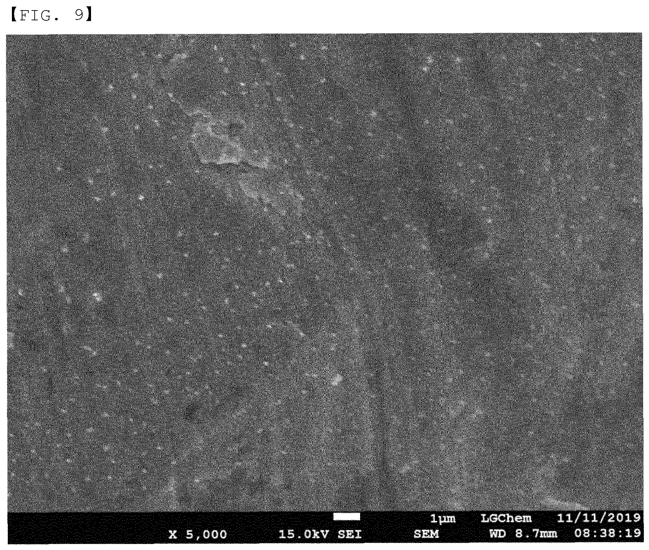

FIG. 7 is a SEM photograph showing the surface of the negative electrode manufactured according to Example 4 after removing the masking member, the surface that has been masked and thus having no coating layer formed thereon. FIG. 8 is an enlarged view of a white quadrangular portion of FIG. 7, and FIG. 9 is a SEM photograph showing the surface of the negative electrode manufactured according to Example 4 that has not been masked and thus having a lithiophilic material coating layer formed thereon.

### <Comparative Example 1>

A copper current collector having a smooth surface on which no LPM coating was performed was prepared so as to be used as a negative electrode.

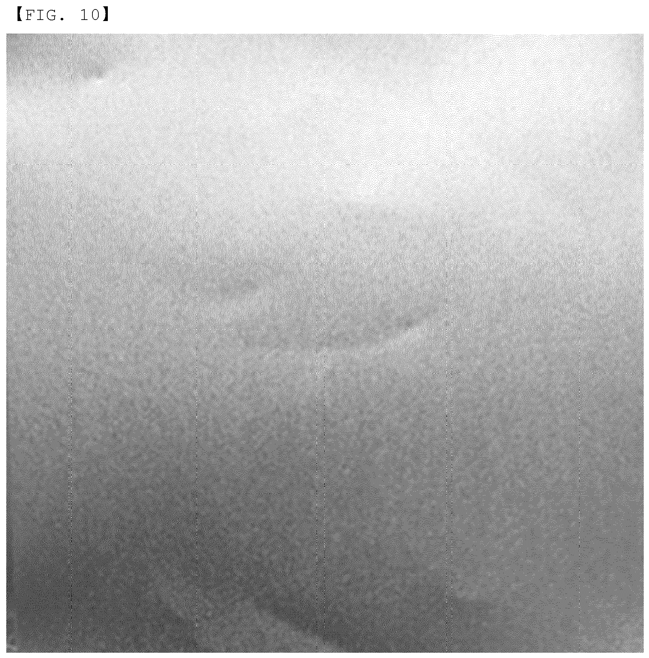

A photograph of the surface of the negative electrode manufactured according to Comparative Example 1 is shown in FIG. 10.

### <Comparative Example 2>

A copper current collector having a mesh structure on which no LPM coating was performed was prepared so as to be used as a negative electrode.

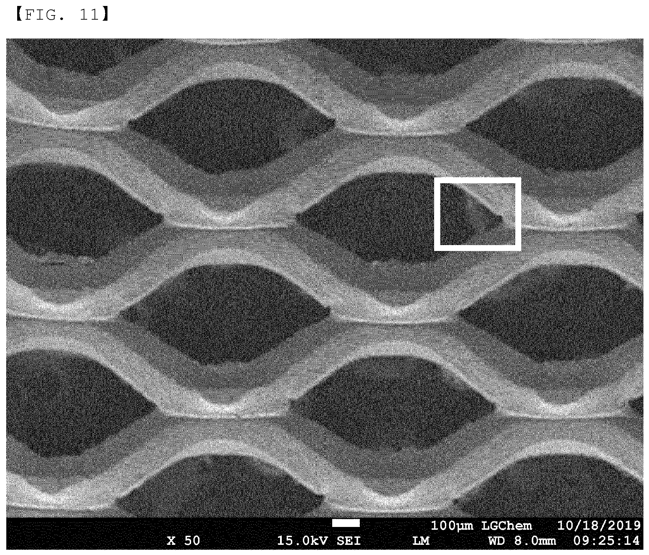

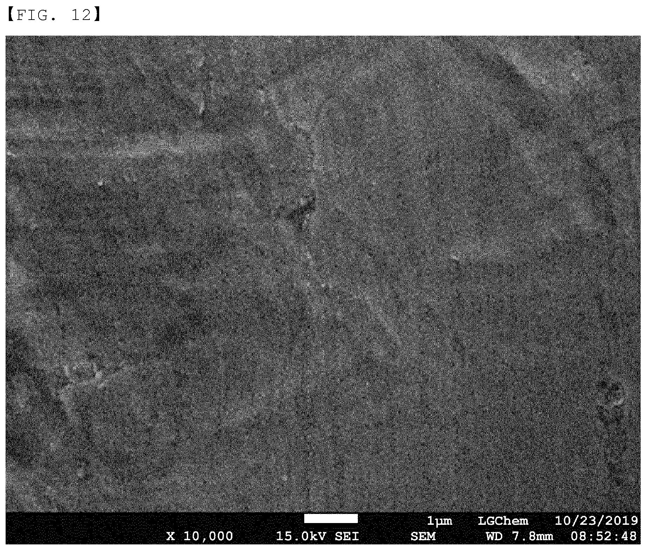

SEM photographs of the negative electrode manufactured according to Comparative Example 2 are shown in FIGS. 11 and 12. FIG. 12 is an enlarged view of a white quadrangular portion of FIG. 11.

### <Comparative Example 3>

A copper current collector having a mesh structure to which no masking member was applied was immersed in an LPM coating solution, in which 2 mg/ml of HAuCl₄ was dissolved in ethanol, for 10 seconds to manufacture a negative electrode having LPM coating layers formed on opposite surfaces of the copper current collector.

### Short-circuit occurrence experiments

Coin cells were manufactured using the negative electrodes manufactured according to Example 1 to Example 4 and Comparative Example 1 to Comparative Example 3.

In order to manufacture a slurry for positive electrode formation, NCM811, as a positive electrode active material, carbon, as a conductive agent, and polyvinylidene fluoride, as a binder, were mixed with each other in a weight ratio of 95:2:3.

The slurry for positive electrode formation was applied to an aluminum current collector so as to have a thickness of 20 µm using a doctor blade and was then vacuum-dried at 120°C for 4 hours.

The aluminum current collector having the vacuum-dried slurry for positive electrode formation was rolled using a roll press to manufacture 3 mAh/cm² of a positive electrode.

In order to manufacture a liquid electrolyte, 1 M of LiPF₆, as lithium salt, 0.5 volume% of vinylene carbonate, and 1 volume% of fluoroethylene carbonate were added to a mixture of ethylene carbonate and ethyl methyl carbonate mixed with each other so as to have a volume ratio (volume%) of 3:7.

A coin cell was manufactured using the liquid electrolyte, the positive electrode, and the negative electrode. The number of charges and discharges at which short circuit occurred was measured while the coil cell was charged and discharged under the following conditions. The results are shown in Table 1 below.

Charging condition: constant current (CC)/constant voltage (CV), 4.25 V, 0.5 C, 0.1C current cut-off

Discharging condition: constant current (CC) condition 3V, 0.5C

The number of charges and discharges at which short circuit occurs means a point in time at which voltage is not increased but is maintained uniform or is decreased even though voltage does not reach cut-off voltage while lifespan evaluation is performed under the charging and discharging conditions.

**[Table 1]**

| | Cycle (Number of charges and discharges) |
|---|---|
| Example 1 | 31 |
| Example 2 | 27 |
| Example 3 | 25 |
| Example 4 | 23 |
| Comparative Example 1 | 3 |
| Comparative Example 2 | 6 |
| Comparative Example 3 | 16 |

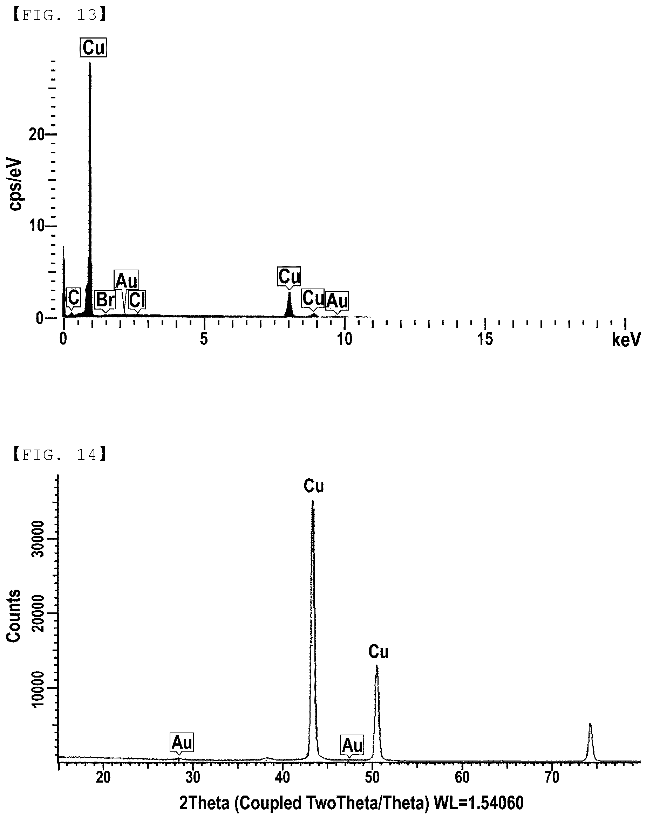

In addition, EDX and XRD results of the surface of the negative electrode manufactured according to Example 1 that had the lithiophilic material coating layer formed thereon are shown in FIG. 13 and FIG. 14, respectively. Referring to FIGS. 13 and 14, it can be seen that Au was measured on the lithiophilic material coating layer.

Referring to Table 1 above, it can be seen that, in the case in which the LPM coating is formed, short circuit does not easily occur. In addition, when comparing the case in which the LPM coating is formed on both surfaces of the negative electrode current collector and the case in which the LPM coating is formed on one surface of the negative electrode current collector with each other, it can be seen that, in the case in which the LPM coating is formed on both surfaces of the negative electrode current collector, short circuit more early occurs. The reason for this is that, in the case in which the LPM coating is also formed on the surface of the negative electrode that faces the separator, lithium dendrites grow toward the positive electrode and penetrate the separator, whereby short circuit occurs.

In addition, short-circuit occurrence time varies depending on the concentration and kind of the metal salt dissolved in the LPM coating solution. However, it can be seen that, in the case in which the LPM coating solution is formed on only one surface of the negative electrode current collector, lifespan characteristics and safety are remarkably improved irrespective of the kind of the current collector, compared to the case in which the negative electrodes of Comparative Examples are used.

### [Industrial Applicability]

As is apparent from the above description, in a negative electrode for lithium secondary batteries according to the present invention, lithium plating occurs in an inner pore of a porous structure of a negative electrode current collector or a through-hole of the negative electrode current collector, whereby lithium dendrites grow in the inner pore or the through-hole. In addition, no lithium dendrites are formed on the surface of the negative electrode current collector that faces a positive electrode.

Consequently, it is possible to prevent growth of lithium dendrites toward the positive electrode, thus preventing occurrence of internal short circuit, whereby it is possible to improve lifespan characteristics and safety of a lithium secondary battery.

## Claims

1. A method of manufacturing a negative electrode, the method comprising:
preparing a negative electrode current collector comprising a porous structure having an inner pore or a through-hole formed therethrough from an upper surface to a lower surface thereof;
masking a first surface of the negative electrode current collector that faces a positive electrode;
coating the masked negative electrode current collector with a lithiophilic material; and
removing the masking, and
removing a lithiophilic material coating solution after the step of removing the masking,
wherein the lithiophilic material is coated at least in the inner pore or the through-hole of the negative electrode current collector from which the masking is removed, except the first surface of the negative electrode current collector which has been masked and faces the positive electrode.

2. The method according to claim 1, wherein the coating step is performed by at least one selected from the group consisting of immersing, spin coating, dip coating, spray coating, doctor blade coating, solution casting, drop coating, physical vapor deposition (PVD), and chemical vapor deposition (CVD).

3. The method according to claim 1, wherein the masking step is performed by attaching a tape to the first surface of the negative electrode current collector.

4. A negative electrode for lithium secondary batteries obtained by the method according to any one of claims 1 to 3, the negative electrode comprising:
a negative electrode current collector comprising a porous structure having an inner pore or a through-hole formed therethrough from an upper surface to a lower surface thereof,
wherein a lithiophilic material (LPM) is applied to a surface of the porous structure or the through-hole excluding a first surface of the negative electrode current collector that faces a positive electrode, and
the lithiophilic material is formed at least on a surface of the inner pore of the porous structure or the through-hole, and
wherein the thickness of the negative electrode current collector is 5 µm to 30 µm.

5. The negative electrode according to claim 4, wherein the lithiophilic material further comprises a lithium metal coating.

6. The negative electrode according to claim 4, wherein the lithiophilic material is at least one of a metal or a metal oxide.

7. The negative electrode according to claim 6, wherein the lithiophilic material is at least one of a metal comprising Au, Ag, Pt, Zn, Si, or Mg and a metal oxide comprising CuO, ZnO, CoO, or MnO.

8. An electrode assembly comprising the negative electrode according to any one of claims 4 to 7.

9. The electrode assembly according to claim 8, wherein the electrode assembly is one of the following:
a mono-cell in which two electrodes different from each other are disposed such that a separator is interposed therebetween; and
a bi-cell in which three electrodes are disposed such that adjacent electrodes have different polarities from each other and a separator is interposed therebetween.

## Patentansprüche

1. Verfahren zur Herstellung einer negativen Elektrode, wobei das Verfahren umfasst:
Herstellen eines Negativelektrodenstromabnehmers, der eine poröse Struktur mit einer inneren Pore oder einem Durchgangsloch umfasst, die bzw. das durch diese hindurch von einer oberen Oberfläche zu einer unteren Oberfläche davon ausgebildet ist;
Maskieren einer ersten Oberfläche des Negativelektrodenstromabnehmers, die einer positiven Elektrode zugewandt ist;
Beschichten des maskierten Negativelektrodenstromabnehmers mit einem lithiophilen Material; und
Entfernen der Maskierung, und
Entfernen einer Beschichtungslösung aus einem lithiophilen Material nach dem Schritt des Entfernens der Maskierung,
wobei das lithiophile Material zumindest in der inneren Pore oder dem Durchgangsloch des Negativelektrodenstromabnehmers beschichtet wird, von der bzw. dem die Maskierung entfernt wird, mit Ausnahme der ersten Oberfläche des Negativelektrodenstromabnehmers, die maskiert wurde und der positiven Elektrode zugewandt ist.

2. Verfahren nach Anspruch 1, bei dem der Beschichtungsschritt durch mindestens eines ausgewählt aus der Gruppe bestehend aus Tauchen, Rotationsbeschichten, Tauchbeschichten, Sprühbeschichten, Rakelbeschichten, Lösungsgießen, Tropfenbeschichten, physikalischer Gasphasenabscheidung (PVD) und chemischer Gasphasenabscheidung (CVD) durchgeführt wird.

3. Verfahren nach Anspruch 1, bei dem der Maskierungsschritt durch Anbringen eines Bandes an der ersten Oberfläche des Negativelektrodenstromabnehmers durchgeführt wird.

4. Negative Elektrode für Lithiumsekundärbatterien, die durch das Verfahren nach einem der Ansprüche 1 bis 3 erhalten wird, wobei die negative Elektrode umfasst:
einen Negativelektrodenstromabnehmer, der eine poröse Struktur mit einer inneren Pore oder einem Durchgangsloch umfasst, die bzw. das durch diese hindurch von einer oberen Oberfläche zu einer unteren Oberfläche davon ausgebildet ist,
wobei ein lithiophiles Material (LPM) auf eine Oberfläche der porösen Struktur oder des Durchgangslochs aufgebracht wird, mit Ausnahme einer ersten Oberfläche des Negativelektrodenstromabnehmers, die einer positiven Elektrode zugewandt ist, und
das lithiophile Material zumindest auf einer Oberfläche der inneren Pore der porösen Struktur oder des Durchgangslochs ausgebildet ist, und
wobei die Dicke des Negativelektrodenstromabnehmers 5 µm bis 30 µm beträgt.

5. Negative Elektrode nach Anspruch 4, bei der das lithiophile Material ferner eine Lithiummetallbeschichtung umfasst.

6. Negative Elektrode nach Anspruch 4, bei der das lithiophile Material zumindest eines von einem Metall oder einem Metalloxid ist.

7. Negative Elektrode nach Anspruch 6, bei der das lithiophile Material zumindest eines von einem Metall, das Au, Ag, Pt, Zn, Si oder Mg umfasst, und einem Metalloxid, das CuO, ZnO, CoO oder MnO umfasst, ist.

8. Elektrodenanordnung, die die negative Elektrode nach einem der Ansprüche 4 bis 7 umfasst.

9. Elektrodenanordnung nach Anspruch 8, bei der die Elektrodenanordnung eine der folgenden ist:
eine Monozelle, in der zwei voneinander verschiedene Elektroden so angeordnet sind, dass ein Separator dazwischen angeordnet ist; und
eine Bizelle, in der drei Elektroden so angeordnet sind, dass benachbarte Elektroden voneinander verschiedene Polaritäten aufweisen und ein Separator dazwischen angeordnet ist.

## Revendications

1. Procédé de fabrication d'une électrode négative, le procédé consistant à :
préparer un collecteur de courant d'électrode négative comprenant une structure poreuse ayant un pore intérieur ou un trou traversant formé à travers celle-ci depuis une surface supérieure à une surface inférieure de celle-ci ;
masquer une première surface du collecteur de courant d'électrode négative qui fait face à une électrode positive ;
revêtir le collecteur de courant d'électrode négative masqué avec un matériau lithiophile ; et
retirer le masquage, et
retirer une solution de revêtement de matériau lithiophile après l'étape de retrait du masquage,
dans lequel le matériau lithiophile est revêtu au moins dans le pore intérieur ou le trou traversant du collecteur de courant d'électrode négative d'où le masquage est retiré, sauf la première surface du collecteur de courant d'électrode négative qui a été masquée et fait face à l'électrode positive.

2. Procédé selon la revendication 1, dans lequel l'étape de revêtement est effectuée par un ou plusieurs revêtements sélectionnés dans le groupe constitué d'une immersion, revêtement par centrifugation, revêtement par immersion, revêtement par pulvérisation, enduction à la racle, coulée en solution, revêtement par pulvérisation de gouttelettes, dépôt physique en phase vapeur (PVD) et dépôt chimique en phase vapeur (CVD).

3. Procédé selon la revendication 1, dans lequel l'étape de masquage est effectuée en fixant un ruban à la première surface du collecteur de courant d'électrode négative.

4. Électrode négative pour batteries rechargeables au lithium, obtenue par le procédé selon l'une quelconque des revendications 1 à 3, l'électrode négative comprenant :
un collecteur de courant d'électrode négative comprenant une structure poreuse ayant un pore intérieur ou un trou traversant formé à travers celle-ci depuis une surface supérieure à une surface inférieure de celle-ci,
dans lequel un matériau lithiophile (LPM) est appliqué à une surface de la structure poreuse ou du trou traversant en excluant une première surface du collecteur de courant d'électrode négative qui fait face à une électrode positive, et
le matériau lithiophile est formé sur au moins une surface du pore intérieur de la structure poreuse ou du trou traversant, et
dans lequel l'épaisseur du collecteur de courant d'électrode négative est 5 µm à 30 µm.

5. Électrode négative selon la revendication 4, dans laquelle le matériau lithiophile comprend en outre un revêtement de lithium métal.

6. Électrode négative selon la revendication 4, dans laquelle le matériau lithiophile est soit un métal, soit un oxyde de métal.

7. Électrode négative selon la revendication 6, dans laquelle le matériau lithiophile est parmi un ou plusieurs métaux comprenant Au, Ag, Pt, Zn, Si ou Mg et un ou plusieurs oxydes de métal comprenant CuO, ZnO, CoO ou MnO.

8. Ensemble électrode comprenant l'électrode négative selon l'une quelconque des revendications 4 à 7.

9. Ensemble électrode selon la revendication 8, dans lequel l'ensemble électrode est l'un des suivants :
une monocellule dans laquelle deux électrodes différentes l'une de l'autre sont disposées de telle sorte qu'un séparateur est interposé entre celles-ci ; et
une bicellule dans laquelle trois électrodes sont disposées de telle sorte que des électrodes adjacentes ont des polarités différentes l'une de l'autre et qu'un séparateur est interposé entre celles-ci.
